# EUROPÄISCHE PATENTSCHRIFT

(11) **EP 1 379 842 B1**
(45) Veröffentlichungstag und Bekanntmachung des Hinweises auf die Patenterteilung: **13.10.2004**
(21) Anmeldenummer: 02707043.2
(22) Anmeldetag: 20.03.2002
(51) Int. Cl.: G01G 21/22, G01G 23/01

(54) **WAAGSCHALE ZUM SCHUTZ DES WÄGEGUTS**
WEIGHING PAN FOR PROTECTING THE PRODUCT TO BE WEIGHED
PLATEAU DE PESEE DESTINE A PROTEGER LE PRODUIT DE PESEE

(30) Priorität: 26.03.2001 DE 10114896
(43) Veröffentlichungstag der Anmeldung: 14.01.2004
(73) Patentinhaber: Mettler-Toledo GmbH, 8606 Greifensee (CH)
(72) Erfinder: WEBER, René, CH-8618 Oetwil am See (CH)
(86) Internationale Anmeldenummer: PCT/IB2002/000815
(87) Internationale Veröffentlichungsnummer: WO 2002/077584

(56) Entgegenhaltungen:
- EP-A- 0 442 607
- US-A- 3 304 773
- DATABASE WPI Section Ch, Week 8618 Derwent Publications Ltd., London, GB; Class A14, AN 1986-116723 XP002201166 & JP 61 057660 A (SEKISUI CHEM IND CO LTD) , 24. März 1986 (1986-03-24)
- DATABASE WPI Section Ch, Week 0130 Derwent Publications Ltd., London, GB; Class A04, AN 2001-285789 XP002201167 & JP 2001 049055 A (DAIICHI KOGYO SEIYAKU CO LTD), 20. Februar 2001 (2001-02-20)

## Beschreibung

Die Erfindung betrifft eine Waagschale, die sich besonders für den Einsatz mit Waagen eignet, bei denen besondere Anforderungen für das Auflegen des Wägeguts bestehen, namentlich Komparatorwaagen, wobei die Waagschale in einer Weise ausgestaltet ist, die der Schonung des Wägeguts dient.

Für den bestimmungsgemässen Umgang mit einer Waage gibt es in der Regel Anleitungen. Auch ist die Handhabung des Wägeguts beim Aufbringen auf die Waagschale und die Durchführung des Wägevorgangs, insbesondere im Laborbereich, durch Vorschriften oder durch sogenannte "Standard Operating Procedures" (SOP) festgelegt. Ziel dieser Anleitungen ist es, sowohl die Waage als auch das Wägegut weitestgehend von einer Beschädigung frei zu halten. Je empfindlicher die Waage ist, desto grösser ist die Wahrscheinlichkeit, dass selbst bei grösster Sorgfalt sowohl die Waagschale als auch das hochempfindliche Wägegut im Laufe der Zeit Zeichen von Beanspruchung zeigen. Dies soll im folgenden anhand einer Komparatorwaage dargestellt werden.

Eine Komparatorwaage, wie sie beispielsweise in der DE 295 17 368 U1 beschrieben ist, muss höchsten Anforderungen hinsichtlich Auflösung und Wiederholbarkeit genügen. Ebenso sind die Prüfgewichte, deren Masse oder Volumen auf einer solchen Waage mit einer bekannten Referenz verglichen wird, gemäss internationalen Normen in Klassen bezüglich ihrer Massen-Toleranzen eingeteilt. Weitere Anforderungen bestehen hinsichtlich physikalischer Eigenschaften, wie Form, Material, Dichte, Oberflächenbeschaffenheit usw. Hauptanwender von Komparatorwaagen sind nationale Masselabors, Eichämter sowie private und unternehmensinterne Kalibrierlabors. Die Ausgestaltung einer Komparatorwaage, insbesondere aber deren Waagschale, verlangt daher eine schonende Handhabung der Prüfgewichte und Referenzgewichte, so dass auch nach ca. einer Million Wägezyklen keinerlei Masseverlust durch Abrieb festzustellen ist. Ein solcher wäre zum Beispiel anhand von feinen Kratzern in der ansonsten auf Hochglanz polierten Oberfläche zu erkennen.

Dies musste bislang in Kauf genommen werden, da die Waagschalen aus Metall bestehen (Aluminium oder Stahl), welches vorzugsweise zur eigenen Abriebbeständigkeit gehärtet ist. Infolgedessen bleibt nach längerem Gebrauch allenfalls eine Reklassierung eines Prüfgewichts nach festgestelltem Massenverlust übrig.

Ein Ansatz zur Lösung dieser Problematik besteht darin, die Oberfläche der Prüfgewichte zu härten, wie es in der US 6 552 280 B1 beschrieben wird.

Für andere auf dem Markt befindliche Komparatorwaagen besteht der Schutz der Prüfgewichte darin, dass die Waagschale mit einer auf dieser aufgeklebten Korkplatte versehen wird. Nachteilig hierbei ist jedoch, dass dieses Dämpfungsmaterial nicht abriebfest ist und daher kleine Partikel am Prüfgewicht hängen bleiben können und im Folgenden das Wägeergebnis verfälschen können. Ausserdem ist von einer schnellen Alterung dieses Materials auszugehen, was eine relativ häufige Erneuerung der Auflage erfordert. Als natürliches Material unterliegt Kork bezüglich seiner physikalischen Eigenschaften, beispielweise der Körnigkeit und damit der Oberflächenrauhigkeit oder der Wasseraufnahme starken Schwankungen, was zur Folge hat, dass Prozeduren im Verlauf des Wägevorgangs, wie das Zentrieren der Prüfgewichte auf einer hängend angeordneten Waagschale, wie beispielsweise in der DE 295 17 368 U1 beschrieben, immer wieder angepasst werden müssen.

Das genannte Zentrierungs-Verfahren sieht vor, dass das Prüfgewicht zunächst auf einer Plattform aufliegt oder - beispielsweise im Falle von OIML-Gewichten - steht. Die vorzugsweise hängend installierte Waagschale ist derart ausgebildet, dass sie die Plattform, welche auf- und ab bewegbar ist, durchdringt und damit, bei der Abwärtsbewegung der Plattform das Prüfgewicht von dieser übernimmt. Ist nun das Prüfgewicht a-zentrisch auf der Waagschale platziert, so neigt diese sich leicht dem gemeinsamen Schwerpunkt von Gewicht und Waagschale zu und bringt damit das Gewicht näher zum Zentrum der Plattform. Ein mehrfaches Wiederholen des Vorgangs zentriert iterativ das Gewicht auf der Waagschale. Das Zentrieren der Prüfgewichte auf der Waagschale einer Komparatorwaage ist von hoher Bedeutung für eine präzise Messung, gelingt jedoch nicht immer mit dem oben beschriebenen Verfahren, besonders dann nicht, wenn das Prüfgewicht auf der Waagschale verrutscht.

Die Reibung zwischen Prüfgewicht und Waagschale kann nun zwar durch Aufrauhen der Oberfläche der Waagschale vergrössert werden, jedoch begünstigt dieses wiederum die mechanische Beanspruchung des Prüfgewichts durch die Waagschale. Die US 3 304 773 A, die als nächstliegender Stand der Technik angesehen wird, offenbart eine Kraftmessvorrichtung mit einem Target (äquivalent einer Waagschale), das eine Beschichtung aus Polyethylen, also einem Polymer, aufweist.

Aufgabe der Erfindung ist es daher, eine Waagschale so auszugestalten, dass ein aufliegendes Wägegut weder verrutschen kann noch in irgendeiner Weise beschädigt wird. Gleichzeitig ist auch eine Schonung der Waagschale gefordert.

Die Aufgabe wird erfindungsgemäss mit einer Waagschale gelöst, die mit einer Beschichtung aus einem Polymerlack versehen ist, wobei die Oberfläche der beschichteten Waagschale sowohl eine Gleitreibung als auch eine Haftreibung für ein Prüfgewicht aufweist, die mindestens doppelt so hoch ist, wie jene einer polierten Oberfläche einer baugleichen Waagschale aus hartem Metall.

Die Beschichtung einer Waagschale, die den vorgenannten hohen Anforderungen genügen soll, ist sowohl hinsichtlich der Wahl des Materials als auch dessen Aufbringen auf einen Träger heikel und deshalb unüblich. Es hat sich jedoch gezeigt, dass Polymerlack sich mit vertretbarem Aufwand dauerhaft applizieren lässt und eine besonders günstige Kombination von Eigenschaften aufweist, nämlich eine moderate Härte der Beschichtung, die einem Verkratzen der auf die Waagschale aufgebrachten Prüfgewichte vorbeugt, sowie deren Oberflächenbeschaffenheit, welche ein Verrutschen der Gewichte durch eine genügend hohe Gleit- und Haftreibung verhindert. Weiterhin ist es möglich, zur Vermeidung elektrostatischer Aufladungen der Gewichte, die Beschichtung durch Zugabe von elektrisch leitenden Anteilen, sogenannten Antistatika, zur Lackmischung genügend leitfähig zu machen, ohne durch eine solche Zugabe die restlichen Eigenschaften mehr als unwesentlich zu verändern.

Die Beschichtung mit Polymerlack ist beständig gegenüber Lösungsmitteln wie etwa Alkohole, Benzine und Aceton, wie sie insbesondere für die Reinigung der Waagschale verwendet werden, und weiter gegenüber bekannten Mitteln für die Dichtebestimmung, beispielsweise Wasser als Standardmedium, FC40 oder Silanen in einem Gemisch, insbesondere mit Cyclosilan, wie es in der EP 1 054 248 A2 beschrieben ist.

Es versteht sich von selbst, dass die Beschichtung eine gute Haftung auf dem Substrat - hier auf der Waagschale - besitzt, da es nicht erwünscht ist, die Beschichtung in kurzen Zeitabständen zu erneuern, oder dass infolge ungenügender Abriebfestigkeit Beschichtungsrückstände sich an die Prüfgewichte anlagern oder diese sich in der Flüssigkeit finden, was es speziell im Falle von Waagschalen für einen Volumenkomparator zu vermeiden gilt.

Als besonderer Vorteil der Beschichtung einer Waagschale ist zu erwähnen, dass diese zusätzlich einen Korrosionsschutz erhält und insofern deren Lebensdauer verlängert wird.

Die beschichtete Waagschale besitzt eine gleichmässige, ebene Oberfläche, was den oben beschriebenen Zentriervorgang besonders erleichtert. Die Beschichtung ist überdies elastisch, wodurch ein aufgelegtes Gewicht nach Beendigung des Wägevorgangs keine Eindrücke auf der Oberfläche hinterlässt und demzufolge eine solche Waagschale über lange Zeit Verwendung finden kann.

Weitere Details der Erfindung werden anhand der folgenden Beschreibung der in der Zeichnung beispielhaft dargestellten Ausführungsform einer Waagschale verdeutlicht. Es zeigt:

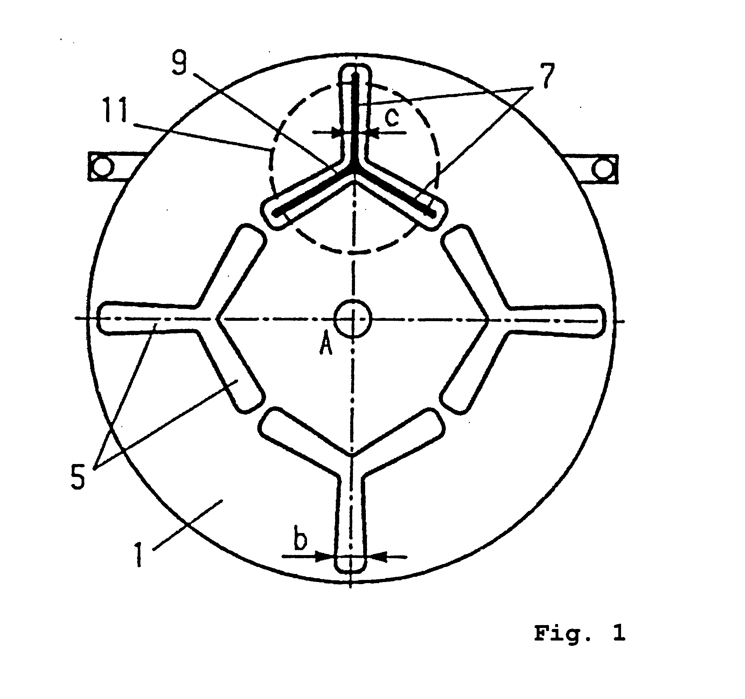

- Fig. 1:: eine Ausgestaltung einer Waagschale, wie sie in einem Massenkomparator Verwendung findet.

Die Figur 1 zeigt eine aus dem Stand der Technik bekannte Plattform 1 zur Auflage des Wägeguts, die um eine Achse A drehbar gelagert ist und als Probenwechsler ausgestaltet ist. In der Form von dreistrahligen Kreuzen sind vier Positionen zur Aufnahme von Prüfgewichten als Schlitze 5 (mit einer Breite b) ausgestaltet. Die Plattform 1 ist in vertikaler Richtung beweglich, so dass eine stegförmige dreistrahlige Waagschale 9 durch die Schlitze hindurch treten kann und ein Prüfgewicht 11 (in gebrochener Linie in der Figur dargestellt) von der Oberfläche der Plattform abheben kann.

Die Stege 7 der Waagschale 9 (mit der Breite c) sind nun erfindungsgemäss mit einer Schicht aus einem Polymerlack, vorzugsweise einem auf Polyurethan basierten Lack beschichtet. Die Dicke der Beschichtung liegt vorzugsweise bei einigen 10 bis 100 Mikrometern, und ist so gewählt, dass einerseits eine gleichmässig ebene Oberfläche der Beschichtung erreicht wird und andererseits auch eine genügend hohe Elastizität und eine geringe Härte der Waagschalen-Oberfläche erzielt wird. Eine dicke Schicht ist insbesondere von Vorteil, wenn die Schale der Auflage schwerer und kantiger Gewichte dient. Ist hingegen eine möglichst glatte Oberfläche wichtig, so ist diese mit einer dünneren Schicht einfacher zu erreichen.

Die Härte bzw. Elastizität der Beschichtung ist von der Zusammensetzung des Lacks bestimmt; für dünne Schichten ist sie allerdings auch vom Trägermaterial beeinflusst. All zu weich soll die Schicht nicht sein. Als vorteilhaft hat sich eine Shorehärte D von mindestens 50, bevorzugt um 80 bis 100 herum erwiesen. Demgegenüber haben unbeschichtete Waagschalen ungleich härtere Oberflächen; sie bestehen zum eigenen Schutz meist aus hart eloxiertem Aluminium oder aus Edelstahl.

Da das Prüfgewicht 11 auch auf der Plattform 1 aufliegt, ist es sinnvoll, diese zumindest im Bereich der Berührung mit den Prüfgewichten ebenfalls mit einer Beschichtung aus Polymerlack, bevorzugt mit Polyurethan als Basismaterial, zu versehen.

Die Belastbarkeit der Beschichtung konnte anhand von Langzeittests, bei welchen ein 20kg-Gewicht eine Million mal auf der Plattform abgesetzt wurde, nachgewiesen werden. Anhand von stereomikroskopischen Betrachtungen konnten keine Abnutzungserscheinungen nachgewiesen werden. Gleichzeitig wurde auch das Prüfgewicht an seiner Auflagefläche einer genauen Untersuchung mit dem Mikroskop unterzogen. Hier wurden weder Abnutzungserscheinungen noch Ablagerungen von einem möglichen Abrieb der Beschichtung beobachtet. Im Gegensatz dazu wies ein Prüfgewicht, welches wiederholt auf eine unbeschichtete Plattform abgesetzt wurde, nach einem solchen Langzeittest an der Auflagefläche Spuren der Beanspruchung in Form von kleinen Kratzern auf.

Um den Zentriervorgang für das Prüfgewicht auf der Waagschale durch mehrmaliges Abheben und Auflegen durchführen zu können, ist es notwendig, dass das Prüfgewicht eine genügend grosse Haftung auf der Waagschale besitzt. In vergleichenden Messungen des Haftreibungskoeffizienten für eine beschichtete und eine unbeschichtete Waagschale konnte mit Werten von 0,5 bis 1 das Beschichtungsmaterial als geeignet ermittelt werden. Im Falle einer unbeschichteten Waagschale erweist sich der gemessene Wert von 0,2 als wenig geeignet für die Durchführung des Zentriervorgangs.

Durch eine Beigabe von bis zu drei Gewichtsprozenten Antistatika zum Lack, bestehend aus Härter und Basismaterial (Polyurethan) wurde für die Beschichtung eine Grössenordnung der Leitfähigkeit erreicht, die ein Aufladen des Gewichts auf der Waagschale und damit eine Verfälschung des Wägeergebnisses verhindert. Antistatika werden dem Lack vor dem Auftrag als Komponente beigemischt, etwa in der Form des auf dem Markt erhältlichen Produkts "Metaline 950" der Firma Schramm. Eine Beimischung eines grösseren Anteils an Antistatika birgt die Gefahr, dass die guten Eigenschaften des Lacks wesentlich negativ beeinflusst werden.

Für das Aufbringen des Polyurethanlacks muss die zu beschichtende Oberfläche sauber und frei von Fett sein. Die Beschichtung beginnt daher mit einem Reinigungsschritt, der eventuell von einem Aufrauhen der Oberfläche gefolgt und wiederholt sein kann. Danach muss der Träger, insbesondere eine Waagschale, zunächst grundiert werden. Dem schliesst sich eine Trocknungsperiode von ca. einer Stunde, längstens jedoch zwölf Stunden an. Anschliessend wird der eigentliche Lack aufgetragen. Dieser Lack besteht aus zwei Komponenten, dem Basismaterial und dem Härter, welche im Verhältnis von zwei zu eins vermischt werden. Der Mischprozess ist sorgfältig durchzuführen, da er einen erheblichen Einfluss auf die Ebenheit der Schicht hat. Eine Zugabe einer weiteren Komponente mit Antistatika von maximal 3% des Gewichts der Mischung dient der Erhöhung der elektrischen Leitfähigkeit der fertigen Schicht. Auch hier ist ein sorgfältiges Mischen gefordert. In mehreren Arbeitsgängen wird der Lack nun aufgetragen, entweder gespritzt oder mit einem Pinsel. Zwischen den Arbeitsgängen ist ein Ablüften von ca. 15 Minuten im Falle des Spritzens oder von 45 bis 60 Minuten im Falle des Auftragens mit einem Pinsel erforderlich. Nach dem Beschichten benötigt der Polyurethanlack noch einige Tage, um sich zu verfestigen. Dabei sollen die Umgebungstemperaturen zwischen +10°C und +30°C, vorzugsweise bei +20°C liegen.

## Patentansprüche

1. Waagschale für eine Waage, insbesondere eine Komparatorwaage, wobei die Waagschale mit einer Beschichtung aus einem Polymerlack versehen ist, **dadurch gekennzeichnet, dass** die Oberfläche der beschichteten Waagschale sowohl eine Gleitreibung als auch eine Haftreibung für ein Prüfgewicht aufweist, die mindestens doppelt so hoch ist, wie jene einer polierten Oberfläche einer baugleichen Waagschale aus hartem Metall.

2. Waagschale nach Anspruch 1, **dadurch gekennzeichnet, dass** der Polymerlack aus einem Basismaterial und weiteren Komponenten, insbesondere einem Härter, zusammengesetzt ist.

3. Waagschale nach Anspruch 2, **dadurch gekennzeichnet, dass** der Polymerlack Polyurethan als Basismaterial enthält.

4. Waagschale nach Anspruch 2 oder 3, **dadurch gekennzeichnet, dass** der Polymerlack Antistatika von bis zu drei Gewichtsprozenten enthält.

5. Waagschale nach einem der vorhergehenden Ansprüche, **dadurch gekennzeichnet, dass** die Beschichtung mindestens 10 Mikrometer dick ist.

6. Waagschale nach einem der vorhergehenden Ansprüche, **dadurch gekennzeichnet, dass** die Beschichtung eine Shorehärte D von mehr als 50 aufweist.

7. Waagschale nach einem der vorhergehenden Ansprüche, **dadurch gekennzeichnet, dass** die Beschichtung beständig gegen Lösungsmittel ist.

8. Waagschale nach einem der vorhergehenden Ansprüche, **dadurch gekennzeichnet, dass** die Beschichtung beständig gegen Flüssigkeiten zum Messen der Dichte von Körpern ist, worunter insbesondere Wasser, FC40 und Flüssigkeiten, die Silan enthalten, fallen.

9. Waagschale nach einem der vorhergehenden Ansprüche, **dadurch gekennzeichnet, dass** die Waagschale für ein Zusammenwirken mit einer relativ zur Waagschale aufund ab bewegbar ausgestalteten und von der Waagschale berührungsfrei durchgreifbaren Plattform eines Probenwechslers zur Übergabe von Wägegut ausgestaltet ist.

10. Waagschale nach Anspruch 9, **dadurch gekennzeichnet, dass** die Plattform mit einer Beschichtung aus dem selben Polymerlack versehen ist, wie ihn die Waagschale aufweist.

## Claims

1. Weighing pan for a balance, in particular for a comparator balance, wherein the weighing pan is provided with a coating of a polymer lacquer, **characterized in that** the surface of the coated weighing pan in relation to a test weight has a sliding friction as well as an adhesive friction that are at least twice as strong as those of a polished surface of an identically constructed weighing pan made of hard metal.

2. Weighing pan according to claim 1, **characterized in that** the polymer lacquer is composed of a base material and additional components including in particular a hardening agent.

3. Weighing pan according to claim 2, **characterized in that** the polymer lacquer contains polyurethane as base material.

4. Weighing pan according to claim 2 or 3, **characterized in that** the polymer lacquer contains antistatic agents in a proportion of up to three percent by weight.

5. Weighing pan according to one of the preceding claims, **characterized in that** the coating is at least 10 micrometers thick.

6. Weighing pan according to one of the preceding claims, **characterized in that** the coating has a Shore D hardness of more than 50.

7. Weighing pan according to one of the preceding claims, **characterized in that** the coating is resistant to solvents.

8. Weighing pan according to one of the preceding claims, **characterized in that** the coating is resistant to fluids used in measuring the density of bodies, including in particular water, FC40, and fluids containing silane.

9. Weighing pan according to one of the preceding claims, **characterized in that** the weighing pan is configured to cooperate with a platform of a weighing object changer for transferring the weighing object, wherein the platform is movable up and down relative to the weighing pan while the weighing pan reaches through the platform without making contact with the platform.

10. Weighing pan according to claim 9, **characterized in that** the platform is provided with a coating of the same polymer lacquer as used on the weighing pan.

## Revendications

1. Plateau de balance pour une balance, en particulier une balance comparatrice, le plateau de balance étant pourvu d'un revêtement à base d'une laque polymère, **caractérisé en ce que** la surface du plateau de balance enduit présente aussi bien un friction de glissement qu'un friction par adhérence pour un poids de test qui sont au moins deux fois plus élevés que ceux d'une surface polie d'un plateau de balance de construction identique à base de métal dur.

2. Plateau de balance selon la revendication 1,
**caractérisé en ce que** la laque polymère est composée d'un matériau de base et d'autres composants, en particulier un durcisseur.

3. Plateau de balance selon la revendication 2,
**caractérisé en ce que** la laque polymère contient du polyuréthane comme matériau de base.

4. Plateau de balance selon la revendication 2 ou 3, **caractérisé en ce que** la laque polymère contient des antistatiques représentant jusqu' à trois pour-cent de poids.

5. Plateau de balance selon l'une quelconque des revendications précédentes, **caractérisé en ce que** le revêtement a une épaisseur d'au moins de 10 microns.

6. Plateau de balance selon l'une quelconque des revendications précédentes, **caractérisé en ce que** le revêtement présente une dureté Shore D de plus de 50.

7. Plateau de balance selon l'une quelconque des revendications précédentes, **caractérisé en ce que** le revêtement est résistant aux solvants.

8. Plateau de balance selon l'une quelconque des revendications précédentes, **caractérisé en ce que** le revêtement est résistant aux liquides pour la mesure de la densité de corps, dont en particulier de l'eau, du FC 40 et les liquides qui contiennent du silane.

9. Plateau de balance selon l'une quelconque des revendications précédentes, **caractérisé en ce que** le plateau de balance est conçu pour une interaction avec une plate-forme, conçue de façon à pouvoir se déplacer vers le haut et vers le bas par rapport au plateau de balance et pouvant être saisie par le plateau de balance sans contact, d'un échangeur d'échantillons pour la remise du produit pesé.

10. Plateau de balance selon la revendication 9,
**caractérisé en ce que** la plate-forme est pourvue d'un revêtement à base de la même laque polymère que celle que présente le plateau de balance.
